# EUROPEAN PATENT APPLICATION

(11) **EP 1 696 430 A1**
(43) Date of publication of application: **30.08.2006**
(21) Application number: 04819814.7
(22) Date of filing: 30.11.2004
(51) Int. Cl.: G11B 7/24

(54) **OPTICAL RECORDING MEDIUM**

(30) Priority: 03.12.2003 JP 2003404947; 26.02.2004 JP 2004052464
(71) Applicant: Ricoh Company, Ltd., Tokyo 143-8555 (JP)
(72) Inventor: Yamada, Katsuyuki, Zama-shi, Kanagawa 228-0024 (JP); Narumi, Shinya, Yokohama-shi, Kanagawa 245-0051 (JP); Kato, Masaki, Sagamihara-shi, Kanagawa 228-0811 (JP); Nakamura, Yuki, Tokyo 195-0053 (JP)
(74) Representative: Barz, Peter
(86) International application number: PCT/JP2004/017759
(87) International publication number: WO 2005/055219

(57) **Abstract**

An object of the present invention is to provide an optical recording medium which exhibits high storage reliability in high-temperature/high-humidity conditions, stable performance at high temperatures, appropriate mechanical properties and high productivity and is capable of reproducing and recording at high speeds. It is an optical recording medium containing a lower protective layer, an optical recording layer, an upper protective layer and an optical reflective layer which contains 98% by weight or more of Ag that are formed on the substrate, the thickness of the optical recording layer is 8nm to 14nm and the thickness of the upper protective layer is 4nm to 24nm, the upper protective layer contains at least one of zinc oxide, indium oxide, tin oxide, niobium oxide, silicon nitride, aluminum nitride and SiOx (1.6 ≤ x ≤ 1.9) and less than 0.1% by weight of at least any one of sulfur and chlorine, and the upper protective layer is amorphous after recording or rewriting.

## Description

### Technical Field

The present invention relates to an optical recording medium used for high-speed recording such as CD-RW, DVD-RW, DVD+RW and DVD-RAM, etc. which are capable of performing any one of recording and reproducing of information by laser beam irradiation. The present invention particularly relates to an optical recording medium which has as much recording capacity as DVD-ROM and can realize a recording speed of 4 double-speed or more of DVD-ROM.

### Background Art

As phase-change optical recording media which are capable of performing reproducing or recording by laser beam irradiation, PD, CD-RW, DVD-RW, DVD+RW, DVD-RAM, etc. are being commercialized. Recording with higher densities and higher linear velocities is further demanded for these optical recording media in order to achieve recording of more information at higher velocities. At the same time, along with the popularization of recording/reproducing apparatus of phase-change optical recording media, it is becoming common to perform recording on one phase-change optical recording medium by means of a number of various recording apparatuses. In other words, it is becoming increasingly common to perform recording on a phase-change optical recording medium by means of a recording apparatus of one maker and perform overwriting by means of a recording apparatus of other maker (inter-company overwrite: ICOW) and the increase in reproduction errors caused by degradation of recording quality due to the difference in recording apparatuses is becoming an issue. Moreover, addition to the degradation of recording quality between recording apparatuses for the phase-change optical recording media which are capable of CAV recording or multiple-speed recording, degradation of recording quality due to recordings performed at different recording linear velocities (inter-velocity overwrite: IVOW) is also becoming an issue.

As measures to settle above issues, methods in which recording is performed with somewhat more power than initial recording during overwriting by means of a recording apparatus are disclosed in Patent Literatures 1 to 3. Furthermore, as a step to improve issues associated with the above ICOW or IVOW, use of Ag optical reflective layer is being studied.

When Ag is used for optical reflective layers of phase-change optical recording media, advantages of the following (1) to (5) are expected.
(1) Disc reflectance is maintained in a wide wavelength region and difference in recording wavelengths can be compromised.
(2) Signal amplitude is ensured by quenching layer structure
(3) Recordable linear velocity range is broadened by quenching layer structure
(4) Productivity improvement by high sputtering efficiency
(5) Thermal stress decrease (improvement of mechanical properties of disc) by shortened film-forming time in sputtering

In order to use high heat conductivity of Ag and ensure these advantages of Ag, Ag is preferably having a purity of 98% by weight or more and more preferably having a purity of 99.9% by weight or more.

On the other hand, when Ag is used for optical reflective layers of optical recording media, the following points (1) to (4) should be noted.
(1) tendency to corrode in high-temperature, high-humidity condition
(2) tendency to corrode with sulfur or chlorine
(3) small film adherence with undercoat layers
(4) It is a noble metal and is expensive compared to Al etc. commonly used in reflective layers.

In order to suppress corrosion of Ag, methods for alloying Ag such as AgCu disclosed in Patent Literature 4, AgMg disclosed in Patent Literature 5, AgOM (M: Sb, Pd, Pt) disclosed in Patent Literature 6 and AgPdCu disclosed in Patent Literature 7 can be applied. Moreover, a method for containing various additive elements in Ag in order to control thermal conductivity is disclosed in Patent Literature 8.

Further, ultraviolet curable resins are generally formed on the surfaces of Ag reflective layers in order to suppress corrosion of Ag reflective layers. For example, it is disclosed in Patent Literature 9 that by using resins having a glass transition temperature of 45°C or more, wrinkles of resin due to absorption of water do not emerge and corrosion of Ag reflective layers can be avoided.

On the other hand, layer compositions of commonly used phase-change optical recording media consist of substrate, lower protective layer, optical recording layer, upper protective layer and optical reflective layer. Furthermore, intermediate layers are formed between lower protective layer and optical recording layer, between optical recording layer and upper protective layer, and between upper protective layer and optical reflective layer. The various techniques described as follow are known for upper protective layers and intermediate layers which lie adjacent to optical reflective layers in these layer compositions.

In Patent Literature 10, use of oxides, sulfides, selenides and fluorides of various metals or semimetals for upper protective layers for preventing thermal deformation or evaporation associated with heating of optical recording layers is disclosed. And a lamination of organic protective layers such as methacrylic resins for ensuring mechanical strength and weather resistance of upper protective layers is also disclosed.

In Patent Literature 11, a basic composition of phase-change optical recording media consisting of substrate, lower protective layer, optical recording layer, upper protective layer and optical reflective layer, where upper and lower protective layers are formed for preventing diffusion of optical recording layer and optical reflective layers are formed for optical enhancement effect is disclosed. Moreover, use of oxides, sulfides, selenides, fluorides, nitrides or C of various metals or semimetals in upper protective layers and adjusting layer thickness within 1nm to 50nm and further use of the same material for lower protective layers as used for the upper protective layers are also disclosed.

In Patent Literature 12, use of oxides, fluorides and nitrides of various metals or semimetals for upper protective layers for the purpose of achieving high sensitivity and longer operating life is disclosed.

In Patent Literature 13, use of GeOx for the lower protective layers for reducing refractive index relative to optical recording layers and improving sensitivity and reducing thermal damages received by substrates by using optical interference effect is disclosed.

In Patent Literature 14, properties required for lower and upper protective layers are stated as 1) transparent at the used wavelength region, 2) relatively high melting points and 3) having no cracks. And the use of ZnS, ZnSe and ZnTe, which are capable of ensuring heat resistance of approximately 2,000°C and increasing refractive index more than that of substrates for improving absorption rate by optical interference effect, for lower and upper protective layers which fulfill the above requirements instead of GeO₂ or SiO₂, which have been used generally, are disclosed.

In Patent Literatures 15 and 16, properties such as 1) transparent at used wavelength region, 2) melting points are higher than operating temperatures, 3) having high mechanical strength, 4) chemically stable and 5) having appropriate thermal constants (thermal conductivity and specific heat) are required for lower and upper protective layers for improving mechanical properties, thermal properties and overwriting performance as compared to the lower and upper protective layers in Patent Literature 14 in particular. And the use of mixtures of crystalline chalcogen compounds such as ZnS, ZnSe and ZnTe and glass materials such as SiO₂, GeO₂, SnO₂, In₂O₃ and TeO₂ for lower and upper protective layers which fulfill the above requirements are disclosed and it is stated that write power is lowered at approximately 20mol% of glass materials resulting in reduced thermal damages to improve overwriting performance.

In Patent Literature 17, the use of mixtures of ZnS and SiOx (x=1 to 1.8) for lower and upper protective layers is disclosed and it is stated that compared to the mixture of ZnS and SiO₂, sensitivity is improved by lowered thermal conductivity, and thermal shock resistance is improved based on reduced inner stress due to the grain boundary relaxation of Si/SiO₂ and overwriting performance can be improved.

In Patent Literature 18, it is disclosed that a combination of protective layers which consist of a protective layer of ZrO₂ or SiO₂ with less thermal conductivity and a protective layer of large thermal conductivity on both sides of a recording layer is effective for lowering tracking noise.

In Patent Literature 19, protective layers made up of mixtures of ZnS, ZnSe, CdS, CdSe and InS groups and Ta₂O₅, Cu₂O, WO₃, MoO₃, CeO₂, La₂O₃ and SiO groups are proposed for the purpose of improving high-temperature, high-humidity reliability of ZnS-SiO₂ protective layers at 80°C95%RH and for ensuring heat resistance by having a thermal expansion coefficient more close to that of recording layers.

In Patent Literature 20, the use of ZnS·SiO₂ (less than 25mol%) for lower protective layers and ZnS·SiO₂ (25mol% or more) for upper protective layers are proposed for the purpose of ensuring high-temperature, high-humidity reliability and improving overwriting performance and recording sensitivity.

In Patent Literature 21, the use of Al₂O₃, Ta₂O₅, AlN, Si₃N₄ and ZnS for upper protective layers, the use of Au, Ag and Al for reflective layers and a quenching structure by layer thickness optimization of upper protective layers and reflective layers are proposed for the purpose of improving overwriting performance.

In Patent Literature 22, the use of BN, AIN and SiC with high thermal conductivity for upper protective layers is proposed for realizing a quenching structure of optical recording media.

In Patent Literature 23, the use of Ta oxides and Ta nitrides with high thermal conductivity for upper protective layers and the use of Ag with high thermal conductivity for reflective layers are proposed.

In Patent Literature 24, forming of barrier layers of SiO₂, Al₂O₃ and MgO on both sides of optical recording layers in order to suppress chemical reactions or alteration by alloying between the optical recording layers and the lower or upper protective layers is proposed for improving overwriting performance.

As described above, many material developments for upper protective layers and lower protective layers and developments for layer compositions have been taking place. As a result, a practically usable layer composition of phase-change optical recording media with single optical recording layer, a quenching structure of substrate, lower protective layer, optical recording layer, upper protective layer, optical reflective layer and resin layer is employed and intermediate layers are formed between lower protective layer and optical recording layer, between optical recording layer and upper protective layer and between upper protective layer and optical reflective layer as necessary. The practically usable thickness of each layer is 50nm to 110nm for lower protective layers, 11nm to 20nm for recording layers, 15nm to 40nm for upper protective layers, 120nm to 200nm for optical reflective layers and 2nm to 8nm for intermediate layers. The known materials practically usable for each layer include ZnS· SiO₂ (20mol%) for lower protective layers and upper protective layers, GeSbTe, AgInSbTe and GeInSbTe for recording layers, AlTi, AlTa, Ag, AgPdCu and AgNdCu for reflective layers and GeN, GeCr, Si and SiC for intermediate layers.

However, in case that Ag optical reflective layers are used for high-speed recording of phase-change optical recording medium, it is known that S derived from ZnS·SiO₂ react with Ag and cause corrosion of optical reflective layers, when Ag optical reflective layers are formed directly on ZnS·SiO₂ layers. As a measure to settle above issue, the use of various metals or semimetals, or Ag oxides, Al oxides and Ta oxides for the intermediate layers are disclosed in Patent Literature 25 in order to prevent chemical reaction between sulfur atoms which exist in protective layers of phase-change optical recording media and Ag optical reflective layers. The preferable thickness of the intermediate layer is stated as 40nm for corrosion resistance and high thermal conductivity of Ag optical reflective layers to be exerted effectively and it is also stated that signal properties and storage reliability at 80°C85%RH are appropriate with intermediate layers of 10nm to 50nm thickness.

In Patent Literatures 26 to 28, the use of GeN, GeCrN and SiC for an intermediate layer, i.e., sulfurization-preventing layer of the optical reflective layers made of Ag or Ag alloy is disclosed.

Moreover, nitrides, oxides and carbides of various metals or semimetals as intermediate layers are disclosed in Patent Literature 29 and it is stated that preferable thickness of intermediate layers is 10nm.

However, as a result of analysis conducted by the present inventors, 10nm was too thick for the intermediate layers and initial signal properties and reliability in high humidity at 95%RH were not satisfactory.

Furthermore, it turns out that the film-forming condition of intermediate layers between ZnS·SiO₂ films and Ag or Ag alloy optical reflective films significantly affects the reactivity of Ag and S. In particular, degradation of passivation performance caused by degradation of film quality due to residual oxygen or water vapor during film forming by sputtering is a problem and it turns out that if partial pressure of residual oxygen during forming of intermediate layers is large, it corrode Ag or Ag alloy optical reflective layers. The passivation performance of intermediate layers depend on its film forming condition and strict control on manufacturing process is needed, however, flawless control is not easy from a practical standpoint.

As described above, in order to stably produce a phase-change optical recording medium which is capable of appropriately performing high-density recording at a high speed of DVD 4-double speed, quenching structures or materials generally used for optical recording media are becoming insufficient and more definitive measures are desired.

One of such measures may include avoiding the use of materials containing elements which have high reactivity with Ag such as sulfur and chlorine for upper protective layers.

In Patent Literature 30, the use of materials containing cerium oxide and other oxides as a target material of the second dielectric layer is disclosed in order to realize a phase-change optical recording medium with high storage reliability and appropriate recording/reproducing properties. However, various issues arising when a phase-change optical recording medium which is capable of recording and reproducing at high speed using Ag or Ag alloy for reflective layers and materials containing almost no sulfur or chlorine for upper protective layers are not referred at all and also, effects of crystallized upper protective layers, particularly after recording or rewriting on recording properties are not mentioned at all.
[Patent Literature 1] Japanese Patent Application Laid-Open (JP-A) No. 2000-187840
[Patent Literature 2] JP-A No. 2002-319132
[Patent Literature 3] JP-A No. 2003-36536
[Patent Literature 4] JP-A No. 57-186244
[Patent Literature 5] JP-A No.7-3363
[Patent Literature 6] JP-A No. 9-156224
[Patent Literature 7] JP-A No. 2000-285517
[Patent Literature 8] Japanese Patent (JP-B) No. 2749080
[Patent Literature 9] JP-A No. 2001-222842
[Patent Literature 10] Japanese Patent Application Publication (JP-B) No. 52-2783
[Patent Literature 11] JP-B No. 4-61791
[Patent Literature 12] JP-A No. 60-179953
[Patent Literature 13] JP-B No. 5-45434
[Patent Literature 14] JP-B No. 6-87320
[Patent Literature 15] JP-B No. 4-74785
[Patent Literature 16] JP-B No. 6-90808
[Patent Literature 17] JP-B No. 7-114031
[Patent Literature 18] JP-B No. 2511964
[Patent Literature 19] JP-B No. 2915112
[Patent Literature 20] JP-B No. 2788395
[Patent Literature 21] JP-A No. 5-62244
[Patent Literature 22] JP-A No. 5-151619
[Patent Literature 23] JP-A No. 2002-352472
[Patent Literature 24] JP-B No. 8-27980
[Patent Literature 25] JP-A No. 11-238253
[Patent Literature 26] JP-A No. 9-834298
[Patent Literature 27] JP-A No. 10-275360
[Patent Literature 28] JP-A No. 2002-203338
[Patent Literature 29] JP-A No. 2000-331378
[Patent Literature 30] JP-A No. 2003-166052

### Disclosure of Invention

An object of the present invention is to provide an optical recording medium which exhibits high storage reliability in high-temperature/high-humidity conditions, stable performance at high temperatures, appropriate mechanical properties and high productivity and is capable of reproducing and recording at high speeds.

The above issues are settled by the following inventions (1) to (6) (herein below, may be referred to as the present inventions 1 to 6). 1) The optical recording medium containing a lower protective layer, an optical recording layer, an upper protective layer and an optical reflective layer containing 98% by weight or more of Ag, the thickness of the optical recording layer is 8nm to 14nm and the thickness of the upper protective layer is 4nm to 24nm, the upper protective layer contains at least one of zinc oxide, indium oxide, tin oxide, niobium oxide, silicon nitride, aluminum nitride and SiOx (1.6 ≤ x ≤ 1.9) and less than 0.1% by weight of at least any one of sulfur and chlorine, and the upper protective layer is amorphous after recording or rewriting.
2) The optical recording medium as stated in above 1), wherein the upper protective layer contains two or more layers and at least one layer contains at least one of zinc oxide, indium oxide, tin oxide, niobium oxide, silicon nitride, aluminum nitride and SiOx (1.6≤ x ≤1.9).
3) The optical recording medium as stated in above 1), wherein the upper protective layer contains two or more layers and the most thick layer contains at least one of zinc oxide, indium oxide, tin oxide, niobium oxide, silicon nitride, aluminum nitride and SiOx (1.6 ≤ x ≤ 1.9).
4) The optical recording medium as stated in the above 1) to 3), wherein the total amount of zinc oxide, indium oxide, tin oxide, niobium oxide, silicon nitride, aluminum nitride and SiOx (1.6 ≤ x ≤ 1.9) contained in the upper protective layer is 60mol% to 90mol% of the whole upper protective layer material.
5) The optical recording medium as stated in the above 1) to 4), wherein an Ag⁻O binding exists on an interface between the upper protective layer and the optical reflective layer.
6) The optical recording medium as stated in the above 1) to 5), wherein at least one layer making up the upper protective layer is formed at a film-forming rate of 1nm/s or more and 10nm/s or less.

### Brief Description of Drawings

FIG. 1 is a diagram showing an exemplary layer composition of the phase-change optical recording medium of the present invention.
FIG. 2 is a diagram showing an example of another layer composition of the phase-change optical recording medium of the present invention.

### Best Mode for Carrying Out the Invention

Herein below, the above present invention will be described in detail.

The upper protective layers of commercialized phase-change optical recording media such as CD-RW, DVD-RAM, DVD-RW and DVD+RW are made up only of (ZnS)₈₀(SiO₂)₂₀ (mol%). This is because of well-balanced properties of the material as described above. The upper protective layers or layer structures better than the above material have not been found in phase-change optical recording media which have been introduced in the market.

The reason for the materials other than (ZnS)₈₀(SiO₂)₂₀ (mol%) are not commercialized as upper protective layers of the phase-change optical recording medium may be inability to ensure the following properties (1) to (3).
(1) excellent durability during the heat cycle between the melting point of optical recording layers and the room temperature (flexibility)
(2) thermal expansion coefficient that is close to that of optical recording layers to ensure adherence
(3) sputtering yield which can maintain productivity

However, as described above, when ZnS·SiO₂ (20mol%) is used as upper protective layers and Ag or Ag alloy is used as optical reflective layers, corrosion of optical reflective layers cannot be avoided completely even if intermediate layers (sulfurization-preventing layers) are formed between both layers.

For this reason, when the use of Ag or Ag alloy for optical reflective layers is assumed, the most definitive measures for avoiding corrosion is to use a material which does not contain elements which corrode Ag such as sulfur or chlorine in the upper protective layers.

As a result of dedicated investigation by the present inventors on issues associated with upper protective layers when Ag or Ag alloy is used as optical reflective layers under such circumstances, the following conclusions (1) to (4) have been found.
(1) Make the upper protective layers thin as much as possible to lower the inner stress and thermal stress for improving thermal stress durability.
(2) Make the upper protective layers thin as much as possible to maintain productivity.
(3) Make the thickness of the optical recording layers thin as much as possible to lower excessive heat generation caused by light absorption.
(4) Perform initialization at higher speed in order to lower excessive heat generation in crystallization process of optical recording layers.

As a result of operating the above measures, it turns out that the thickness which can ensure mechanical durabilities against inner stress, thermal stress and thermal impact are found to be 8nm to 14nm for optical recording layers and 4nm to 24nm for upper protective layers. However, when optical recording layers and upper protective layers are thinned to this extent, even though recording and reproducing by testers are possible, sensitivity when using existing optical recording apparatus becomes unsatisfactory.

In the case of DVD+RW disc, modulation degree of recording signals (maximum reflectance of recording signals /amplitude of recording signals) for ensuring stable reproduction by DVD players is determined to be 0.6 or more. Moreover, write power of 4-double speed DVD+RW disc is determined to be 22mW or less.

As a result of further investigation on the improvement of recording sensitivity, the present inventors have found that the thickness of lower protective layers and materials and crystal state of upper protective layers are important.

As a result of investigating the relation between disc reflectance and recording sensitivity of a DVD+RW disc, which has a layer composition of substrate, lower protective layer of (ZnS)₈₀(SiO₂)₂₀ (mol%), optical recording layer of Ge₅Ga₁₀Sb₇₅Sn₁₀ with 11nm thickness, upper protective layer of SiO₂ with 15nm thickness, optical reflective layer of Ag with 140nm thickness, resin layer and cover substrate, when a disc was prepared with various thicknesses of lower protective layer, it turns out that when the disc reflectance is at its minimum, optimal write power (Po) becomes minimum. When an electron beam diffraction of a cross sectional surface of the disc with which the Po becomes minimum was measured by means of a transmission electron microscope, crystalline patterns (spots) were not observed and it was amorphous.

On the other hand, when SiO₂ used as a material of the upper protective layer was replaced with MgO and ZnO, which are detected as being crystalline with electron beam diffraction, the optimal write power stayed 24mW or more. This is probably because thermal conductivity of the upper protective layer is smaller when it is amorphous than when it is crystalline. Therefore, heat dissipation during optical recording is suppressed, which is effective for melting of the optical recording layer.

Moreover, in terms of reflectance and recording sensitivity, thickness of the lower protective layer is preferably in the range of ±10nm of the thickness at which the reflectance reaches its minimum at the wavelength of recording and reproducing..

Further, the recording layer is quenched after being heated at about 500°C to 700°C when recording or rewriting is performed on a phase-change optical recording medium. The upper protective layer is also affected by the temperature change and crystals may be generated. When it is amorphous, it is thermally and optically isotropic and has no effect on recording properties, however, when crystals are formed even in a small amount, crystals grow with repeated recordings and may cause noises and also, corrosion at the crystal grain boundary may occur. Therefore, the upper protective layer of the present invention needs to be amorphous also after recording or rewriting. Of note, being amorphous in the present invention is defined as a state in which crystalline patterns (spots or diffraction rings) are not observed when electron beam diffraction was measured by means of a transmission electron microscope.

As described above, it is possible to improve sensitivity by adjusting the thickness of the lower protective layer so that the disc reflectance becomes its minimum and by making the upper protective layer amorphous.

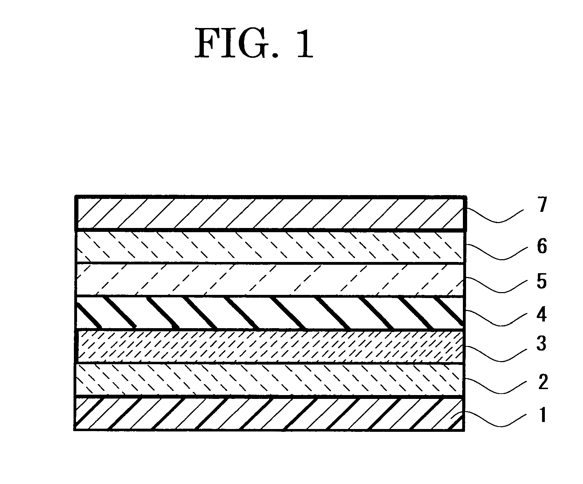

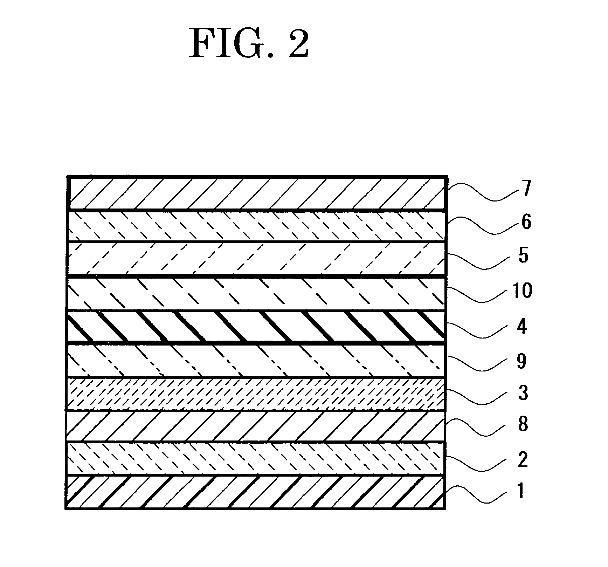

The exemplary layer compositions of the phase-change optical recording medium of the present invention are shown in FIGS. 1 and 2.

FIG. 1 is a basic layer composition and a lower protective layer 2, an optical recording layer 3, an upper protective layer 4, an optical reflective layer 5, a resin layer and/or adhesive layer 6 are formed on an information substrate 1 in this order. It is also possible to form an optical reflective layer, upper protective layer, optical recording layer, lower protective layer and resin layer on a substrate in the reverse order to FIG. 1. In the case of bonding type of optical recording medium, a cover substrate 7 is formed on the adhesive layer.

In FIG. 2, in addition to the basic layer composition of FIG. 1, a first intermediate layer 8 is formed on the lower protective layer 2, a second intermediate layer 9 is formed on the optical recording layer 3 and a third intermediate layer 10 is formed on the upper protective layer 4. Intermediate layers are formed corresponding to the restrictions of intended performance and production facilities.

Each layer may be of an identical material or of pleural materials. Also, each layer may be formed by one film-forming or a number of film-forming. By forming one layer with repeated film-forming processes, it is possible to complement abnormal film-forming and to prevent vital layer dropouts. Of note, a material which contains little corrosive materials of Ag is selected for the upper protective layer of the present invention. In general, corrosive materials of Ag that cause problems are sulfur and chlorine. These elements are preferably not contained in terms of corrosion prevention of Ag and the upper protective layer of the present invention is required not to contain at least any one of sulfur and chlorine in an amount of 0.1% by weight or more (content of at least any one of sulfur and chlorine is less than 0.1%). In other words, the total content of sulfur and chlorine should be less than 0.1% by weight. And if only one of sulfur and chlorine is contained, the content should be less than 0.1% by weight, or sulfur and chlorine may not be contained at all.

Therefore, a material with 99.9% by weight purity is used for the upper protective layers. With this purity, corrosive material of Ag which is contained as impurity can be controlled to be 0.1% by weight or less. The material is preferably with 99.99% by weight purity, however, production cost of the material increases. Furthermore, it is possible for a small amount of corrosive material of Ag such as sulfur and chlorine to be mixed in with a purity level of 99% by weight and it is known that corrosive materials of Ag such as sulfur and chlorine corrode Ag or Ag alloy with a purity level of 90% by weight. All of the upper protective layers which have been investigated so far are with 99.9% by weight or more purity and if this level of purity is maintained, corrosion of Ag or Ag alloy does not occur.

The upper protective layer is effective for preventing cracks and the material such as zinc oxide, indium oxide, tin oxide, niobium oxide, silicon nitride, aluminum nitride and SiOx (1.6 ≤ x ≤ 1.9) is preferably having sputtering speed suitable for producing optical recording medium. These favorable materials are used as main constituents in the present invention and main constituent is defined as having more than 50mol%. When x in SiOx is less than 1.6, optical transmittance of the film is significantly lowered and it does not function as upper protective layer. If x is more than 1.9, sputtering speed is significantly lowered posing problems in production.

The materials used for the present invention preferably contain oxides of Si, Al, Ti, Zn, Zr, Mo, Ta, Nb and W which are capable of having networks of bivalent oxygen with which bonding and rotation are flexible in terms of film flexibility. However, when these upper protective layer materials are formed thickly, cracks tend to appear due to inner stress of the firm itself or thermal stresses between optical recording layers and Ag or Ag alloy reflective layers.

Furthermore, it is possible to make a heat accumulation composition by forming a multilayer upper protective layer to form interfaces of upper protective layers and prevent heat conduction for sensitivity improvement of optical recording. Therefore, the thickness of the upper protective layer is preferably 4nm to 24nm. If it is thinner than 4nm, heat accumulation, which is a function of upper protective layers, become insufficient and recording with existing laser diode becomes difficult. And if it is thicker than 24nm, cracks as described above appears. The more preferable thickness of the upper protective layer is 8nm to 20nm.

The phase-change optical recording medium is produced by sequential film forming of lower protective layer, optical recording layer, upper protective layer and optical reflective layer by sputtering. In this case, the lower protective layer and optical reflective layer having larger thicknesses as compared with other layers require the longest time for film forming. Therefore, in order to form upper protective layers effectively without loss, a forming condition with which a layer of predetermined thickness can be formed with an equivalent or shorter time than that of the lower protective layer or optical reflective layer is desired. If ZnSSiO₂ is used for the lower protective layer, Ag or Ag alloy is used for the reflective layer and sputtering time of 7 seconds or less is aimed, the film forming rate of the upper protective layer should be at least 1nm/s or more and preferably 3nm/s or more.

At the same time, when an extremely thin film of 4nm to 24nm is formed and film forming rate is too high, a fraction of rising time of plasma generation during sputtering increases causing thickness variation among discs resulting in large variation in disc sensitivities. In order to reduce thickness variation of the upper protective layers among discs, the limit film forming rate is 10nm/s or less and preferably 8nm/s or less. The limit film forming rate is a film forming rate at a highest possible power (RF power source of 4kW) when a film is formed by means of an existing production facilities.

The limits of film forming rate of various materials of upper protective layers are shown in Table 1. The materials having film forming rate of 1nm/s or more and 10nm/s or less, which are favorable for the present invention, are zinc oxide, indium oxide, tin oxide, niobium oxide, silicon nitride, aluminum nitride and SiOx. Moreover, in order to make upper protective layers amorphous stably, it was effective to mix SiO₂ or ZrO₂ in these materials even though film forming rate was lowered. In order to produce amorphous films stably without significantly lowering film forming rate, it was effective to add 10mol% to 40mol% of SiO₂ or ZrO₂, in other words to have the above material of upper protective layers in the amount of 60mol% to 90mol%. When additives are 10mol% or more, amorphous stability becomes sufficient and amorphous state is maintained during storage in high temperature, high humidity condition (80°C85%RH) for 300 hours. On the other hand, if the additives are 40mol% or less, sputtering speed become as such that productivity can be maintained and crack durability is maintained because flexibility of the upper protective layer of a base material can be maintained. Meanwhile, SiC and SiOx (x=1.4) have broad light absorption region in recording and reproducing wavelength and could not be used as materials of upper protective layers.

Furthermore, it was effective to form Ag⁻O binding on the interface between upper protective layer and optical reflective layer which contains Ag or Ag alloy as main constituent in order to ensure initialization condition in the manufacturing process of the phase-change optical recording medium, particularly the power margin. Ag⁻O binding was confirmed by a method of analysis such as XPS. When AlN and Si₃N₄ are used for the upper protective layers, formation of Ag⁻O binding was confirmed because oxygen is provided from degasifying of substrate or residual gases. However, the amount of Ag-O binding was relatively small compared to that of when oxides are used for the upper protective layers and power margin during initialization tends to be small.

**Table 1**

| | Limit of Film Forming Rate (nm/s) |
|---|---|
| ZnSSiO₂ | 11.9 |
| SiO₂ | 0.6 |
| SiO_{1.8} | 1.0 |
| SiO_{1.6} | 2.0 |
| SiO_{1.4} | 4.0 |
| Al₂O₃ | 0.7 |
| ZnO | 8.2 |
| (ZnO)₉₀(ZrO₂)₁₀ | 5.7 |
| (ZnO)₆₀(ZrO₂)₄₀ | 4.0 |
| (ZnO)₅₀(ZrO₂)₅₀ | 2.5 |
| In₂O₃ | 8.6 |
| SnO₂ | 9.1 |
| (SnO₂)₇₀(SiO₂)₃₀ | 7.6 |
| Nb₂O₅ | 7.8 |
| (Nb₂O₅)₉₀(SiO₂)₁₀ | 7.0 |
| (Nb₂O₅)₆₀(SiO₂)₄₀ | 6.0 |
| (Nb₂O₅)₅₀(SiO₂)₅₀ | 3.5 |
| Ta₂O₅ | 0.9 |
| AlN | 2.2 |
| Si₃O₄ | 3.5 |
| SiC | 2.5 |

RF discharge, 4kW/200mmϕ

The material of the optical recording layer is preferably phase-change material containing 60atomic% to 90atomic% of Sb. Specific examples of such materials include InSb, GaSb, GeSb, GeSbSn, GaGeSb, GeSbTe, GaGeSbSn, AgInSbTe, GeInSbTe and GeGaSbTe which contain 60atomic% to 90atomic% of Sb. It is known that shortening of the recording time is possible when Sb amount in the recording layer is 60atomic% or more, from the relation between Sb composition ratio and a recording time of a smallest recording mark which makes DVD compatibility or CD compatibility possible when DVD+RW medium is produced with these phase-change materials. In other words, melting time of optical recording layer during recording and erasing can be shortened and heat damage suffered by the optical recording layer and the upper protective layer can be reduced. Moreover, when Sb amount is 60atomic% or more, melting initial crystallization of the optical recording medium can be performed at high speed, lowering the heat damage. Furthermore, when Sb amount is 70atomic% or more, it is possible for initialization linear velocity to be 10m/s or more to further reduce the heat damage. However, when Sb is more than 90atomic%, it is unfavorable even though various elements are added because high temperature, high humidity durability of marks is degraded.

The thickness of the optical recording layer is preferably 8nm to 14nm. When it is thinner than 8nm, crystallization of recording mark in high temperature, high humidity condition of 80°C85%RH is promoted and causes problems in operating life. And when it is more than 14nm, heat generation during optical recording and erasing increases and heat damages suffered by the upper protective layers become notable, inducing occurrence of cracks in the upper protective layers.

Examples of material of the lower protective layers include oxides such as SiO, SiO₂, ZnO, SnO₂, Al₂O₃, TiO₂, In₂O₃, MgO and ZrO₂; nitrides such as Si₃N₄, AlN, TiN, BN and ZrN; sulfides such as ZnS and TaS₄; carbides such as SiC, TaC, B₄C, WC, TiC and ZrC; diamond-like carbon; or mixtures thereof. Of these, materials containing ZnS and SiO₂ such as (ZnS)₈₅(SiO₂)₁₅, (ZnS)₈₀(SiO₂)₂₀, (ZnS)₇₅(SiO₂)₂₅ (mol%) are preferable, and (ZnS)₈₀(SiO₂)₂₀ (mol%), in which optical constant, heat expansion coefficient and elasticity modulus are optimized, is preferable for the lower protective layers which are placed between the phase-change optical recording layer and substrate where heat damages induced by changes in heat expansion, high temperatures and room temperatures are associated. Since the thickness of the lower protective layers significantly affects reflectance, modulation degree and recording sensitivity, it is preferably the thickness at which disc reflectance becomes a minimum value. In this thickness region, recording sensitivity is appropriate and recording at a power which causes less heat damages is possible, leading to improvement of overwrite performance. In order to obtain appropriate signal properties at a DVD recording and reproducing wavelength, the thickness of the lower protective layers is preferably 45nm to 65nm when (ZnS)₈₀(SiO₂)₂₀ (mol%) is used for the lower protective layers. If the thickness is thinner than 45nm, heat damage suffered by the substrates increases and deformation of groove forms occur. And when it is thicker than 65nm, disc reflectance increases and sensitivity is degraded.

Ag or Ag alloy is used for the optical reflective layers, and 98% by weight or more purity is required for bringing out heat conductivity and high reflectance of Ag sufficiently.

As a result of dedicated investigation on the causes of corrosion and film separation of Ag reflective layers in high temperature and high humidity environment, it was found that these are depended on glass transition temperature of resin protective layers or adhesive layers which are applied on Ag optical reflective layers for preventing moisture permeation. At a temperature higher than the glass transition temperature, moisture permeableness and linear coefficient of expansion of resin protective layers or adhesive layers are significantly increased. As a result, it turns out that the moisture reaching the Ag surface, which is a main cause of corrosion or film separation of Ag reflective layers, is nurtured, degrading optical recording medium.

Therefore, it is effective to set the glass transition temperature of resin protective layers or adhesive layers which are in contact with Ag reflective layers at 90°C or more when trying to acquire reliability of Ag reflective layers up to a disc temperature of 90°C, which is an upper limit temperature in common acceleration tests. However, when the glass transition temperature of resin protective layers or adhesive layers are too high, bending strength of optical recording medium decreases and problems such that optical recording medium is likely to be broken when dropped on the floor or being taken out from plastic cases. In order for the optical recording medium to be hardly breakable, the glass transition temperatures of resin protective layers or adhesive layers which are in contact with Ag optical reflective layers is preferably 180°C or less and more preferably 165°C or less.

If resin protective layers and adhesive layers on the Ag optical reflective layers are adjacent to each other and the glass transition temperature of the resin protective layers and adhesive layers differ from each other, heat expansion coefficient also differ significantly. As a result, deformation, warp and tilt, especially deformation, warp and tilt in a circumferential direction occur leading to errors in reproducing and recording at a high speed of 14m/s or more. Therefore, in order to perform stable reproducing and recording at a high speed of 14m/s or more, difference in glass transition temperatures between resin protective layers and adhesive layers formed on the Ag reflective layers is preferably 50°C or less and more preferably 30°C or less. It is also effective to use the same material for resin protective layers and adhesive layers.

The grass transition temperature (Tg) is defined as a temperature at which a volume weight ratio, specific heat, refractive index, permittivity, diffusing constant and elasticity modulus change suddenly when a resin changes by temperature rise. The glass transition temperature of a resin changes depending on chemical composition of starting monomer which makes up the resin and forces between molecules due to the size of its substituent groups and polarities. The grass transition temperature can be obtained from polarity change point of tanδ by means of viscoelasticity measuring equipment.

The lower protective layer, optical recording layer, upper protective layer and optical reflective layer made of Ag or Ag alloy may be formed by methods such as plasma CVD, plasma treatment, ion plating and optical CVD, however, sputtering which are commonly used for production of optical recording medium, is effective. The typical production condition include a pressure of 10⁻²Pa to 10⁻⁴Pa, a sputtering power of 0.1kW/200mmϕ to 5.0kW/200mmϕ and a film forming rate of 0.1nm/s to 50nm/s.

The optimal layer thickness of the optical recording layer and the upper protective layer of the present invention is approximately 10nm, which is thinner than the traditional ones and the control of interface becomes important. The interface of optical recording layer and the upper protective layer of existing phase-change optical recording medium could allow a certain level of interdiffusion. However, in the present invention, sufficient signal properties cannot be obtained with existing level of interdiffusion. It is known by an analysis relating to interdiffusion in a depth direction by means of Auger electron spectroscopy that initial properties cannot be obtained unless interdiffusion region is at least 2nm or less. In order to suppress interdiffusion on the interfaces as much as possible, lowering the substrate temperature is important. By the investigation conducted by the present inventors, it was concluded that it is important to cool inside the sputtering chamber sufficiently to maintain the substrate temperature at 60°C or less. It is preferably 50°C or less.

In general, material of the substrate is glass, ceramics or resin and resin substrate is preferable in terms of formability and cost. Examples of resin include polycarbonate resin, acrylic resin, epoxy resin, polysthyrene resin, acrylonitrile-styrene copolymer resin, polyethylene resin, polypropylene resin, silicone resin, fluorine resin, ABS resin and urethane resin, and polycarbonate resin and acrylic resin are preferable because of excellent formability, optical properties and cost performance.

However, when the optical recording medium of the present invention is applied to the DVD-ROM compatible, rewritable optical recording medium, it is desirable to provide the following specific conditions.

A condition in which width of guide groove formed on the substrate is 0.10µm to 0.40µm, preferably 0.15µm to 0.35pm, and depth of guide groove is 15nm to 45nm, preferably 20nm to 40nm. The thickness of the substrate is preferably 0.55mm to 0.65mm and the thickness of the disc after bonding is preferably 1.1mm to 1.3mm. The reproducing compatibility of DVD-ROM drive is improved by these substrate grooves.

Furthermore, when the optical recording medium of the present invention is applied to CD-RW medium, width of guide grooves on the substrate is 0.25µm to 0.65µm and preferably 0.30µm to 0.60µm, depth of the guide grooves is 20nm to 50nm and preferably 25nm to 45nm.

The ultraviolet-curable resins, which are prepared by spin coating is suitable for the resin protective layers. The appropriate thickness is 3µm to 15µm. If the thickness is thinner than 3µm, error increase may be observed when printing layer is formed on an overcoat layer. At the same time, when it is thicker than 15µm, inner stress increases, significantly affecting the mechanical properties of the disc.

When a hard coat layer is formed, it is common to use ultraviolet-curable resins, which are prepared by spin coating. The appropriate thickness of the hard coat layer is 2µm to 6µm. If the thickness is thinner than 2µm, sufficient abrasion resistance cannot be obtained. If it is thicker than 6µm, inner stress increases, significantly affecting the mechanical properties of the disc. The hardness should be H or more of pencil hardness so that the disc remains without being damaged significantly even when rubbed with a fabric. The conductive material may be mixed in as necessary to prevent electrification in order to prevent attachment of dust, etc.

The printing layer is formed for the purpose of ensuring abrasion resistance, label printing such as brand names and formation of ink-receiving layers for inkjet printers and it is preferable to form an ultraviolet-curable resin by screen printing. The appropriate thickness is 3µm to 50µm. If it is thinner than 3µm, it causes nonuniformity during layer formation. If it is thicker than 50µm, inner stress increases, significantly affecting the mechanical properties of the disc.

The adhesives such as ultraviolet-curable resin, hot melt adhesive and silicon resin may be used for the adhesive layer. These materials are applied on the overcoat layers or printing layers by methods such as spin coating, roll coating and screen printing, depending on the material, and bonded to the opposite side of the disc by performing ultraviolet irradiation, heating, pressurizing, etc. The opposite side of the disc may be a similar single-plate disc or transparent substrate only, and the bonding surface of the opposite side of the disc may not be coated with the material of adhesive layers. Moreover, sticking sheet may be used as the adhesive layer. The thickness of the adhesive layer is not particularly limited and it is 5µm to 100µm and preferably 7µm to 80µm in consideration of effects of coating property and curing property of the material and mechanical properties of the disc. The range of adhesive surface is not particularly limited, however, when it is applied for DVD and/or CD compatible, rewritable discs, the position of inner periphery end is desirably ϕ15mm to ϕ40mm and preferably ϕ15mm to ϕ30mm for ensuring adhesive strength to make high-speed recording possible.

By the present inventions 1 to 6, it is possible to provide an optical recording medium which can pursue improvement of recording sensitivity and at the same time, completely prevent corrosion of Ag because the upper protective layer does not contain sulfur and chlorine substantially, which are corrosion materials of Ag and are not favorable for preventing corrosion of Ag.

Moreover, by the present inventions 1 to 3, it is possible to provide an optical recording medium with high productivity and by the present invention 4, upper protective layer can be produced in amorphous state more stably. By the present invention 5, it is possible to avoid a heat accumulation by making high-speed initialization possible during melting crystallization of optical recording layer in initialization process and decrease the heat damages associated with initialization suffered by the upper protective layer, etc. to improve weatherability of the optical recording medium. It is also possible by the present invention 5 to provide an optical recording medium which can perform high-speed recording and erasing that is, a melting of recording layers at high speeds and decrease the heat damages suffered by the upper protective layers, etc. to improve overwriting performance.

### Example

Herein below, with referring to Examples and Comparative Examples, the invention is explained in detail and the following Examples and Comparative Examples should not be construed as limiting the scope of this invention.

### Example 1

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer and Ag optical reflective layer of 99.99% by weight purity were formed sequentially on the substrate by sputtering. The lower protective layer consists of (ZnS)₈₀(SiO₂)₂₀ (mol%) with a thickness of 55nm, the first intermediate layer consists of SiO₂ with a thickness of 4nm, the optical recording layer consists of Ge₅Ga₁₀Sb₇₅Sn₁₀ with a thickness of 12nm, the upper protective layer consists of (Nb₂O₅)₈₀(SiO₂)₂₀ with a thickness of 12nm formed at a plasma power of 4kW/200mmϕ and a film-forming rate of 4.2nm/s and the optical reflective layer consists of 99.99% by weight of Ag with a thickness of 140nm. The sulfur and chlorine densities of the upper protective layer were 0.1% by weight or less.

As a result, a layer composition containing polycarbonate substrate, 55nm of (ZnS)₈₀(SiO₂)₂₀ (mol%), 4nm of SiO₂, 12nm of Ge₅Ga₁₀Sb₇₅Sn₁₀, 12nm of (Nb₂O₅)₈₀(SiO₂)₂₀ and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 11m/s linear velocity, 1,300mW electricity, 38µm/r feed rate and a constant linear velocity from inner periphery to outer periphery. Peeling off of Ag did not occur by initialization. Moreover, a spectrum which is presumed to be of Ag⁻O was obtained as a result of an analysis on the interface by means of XPS.

Next, an overwriting (DOW) was performed on the obtained phase-change optical recording medium on a format of DVD-ROM readable using a recording/reproducing evaluation apparatus DDU1000 by Pulstec Industrial Co., Ltd. at a recording linear velocity of 14m/s, wavelength of 657nm, NA0.65 and write power of 17mW to 22mW. As a result, appropriate jitter of 9% or less was obtained with 2,000 times or more of overwriting. And after storing the recorded phase-change optical recording medium for a predetermined time at 80°C85%RH, no degradation was observed after 200 hours of storage. Furthermore, when the recorded phase-change optical recording medium was surveyed with TEM, electron diffraction of the upper protective layer was a halo pattern which indicates that it is amorphous.

Further, because of appropriate film-forming rate of the upper protective layer, no adverse effect on the entire production rate was observed.

### Example 2

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer and Ag optical reflective layer of 99.99% by weight purity were formed sequentially on the substrate by sputtering. The lower protective layer consists of (ZnS)₈₀(SiO₂)₂₀ (mol%) with a thickness of 55nm, the first intermediate layer consists of SiO₂ with a thickness of 4nm, the optical recording layer consists of Ge₅Ga₁₀Sb₇₅Sn₁₀ with a thickness of 12nm, the upper protective layer consists of (ZnO)₇₀(ZrO₂)₃₀ with a thickness of 12nm formed at a plasma power of 4kW/200mmϕ and a film-forming rate of 4.2nm/s and the optical reflective layer consists of 99.99% by weight of Ag with a thickness of 140nm. The sulfur and chlorine densities of the upper protective layer were 0.1% by weight or less.

As a result, a layer composition containing polycarbonate substrate, 55nm of (ZnS)₈₀(SiO₂)₂₀ (mol%), 4nm of SiO₂, 12nm of Ge₅Ga₁₀Sb₇₅Sn₁₀, 12nm of (ZnO)₇₀(ZrO₂)₃₀ and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 12m/s linear velocity, 1,500mW electricity, 38µm/r feed rate and a constant linear velocity from inner periphery to outer periphery. Peeling off of Ag did not occur by initialization. Moreover, a spectrum which is presumed to be of Ag⁻O was obtained as a result of an analysis on the interfaces by means of XPS.

Next, an overwriting (DOW) was performed on the obtained phase-change optical recording medium on a format of DVD-ROM readable using a recording/reproducing evaluation apparatus DDU1000 by Pulstec Industrial Co., Ltd. at a recording linear velocity of 14m/s, wavelength of 657nm, NA0.65 and write power of 17mW to 22mW. As a result, appropriate jitter of 9% or less was obtained with 2,000 times or more of overwriting. And after storing the recorded phase-change optical recording medium for a predetermined time at 80°C85%RH, no degradation was observed after 200 hours of storage. Furthermore, when the recorded phase-change optical recording medium was surveyed with TEM, electron diffraction of the upper protective layer was a halo pattern which indicates that it is amorphous.

Further, because of appropriate film-forming rate of the upper protective layer, no adverse effect on the entire production rate was observed.

### Example 3

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer, a second intermediate layer and Ag optical reflective layer of 99.99% by weight purity were formed sequentially on the substrate by sputtering. The lower protective layer consists of (ZnS)₈₀(SiO₂)₂₀ (mol%) with a thickness of 55nm, the first intermediate layer and the second intermediate layer consist of Al₂O₃ each with a thickness of 4nm, the optical recording layer consists of Ge₅Ga₁₀Sb₇₅Sn₁₀ with a thickness of 12nm, the upper protective layer consists of (SnO₂)₆₀(SiO₂)₄₀ with a thickness of 12nm formed at a plasma power of 2kW/200mmϕ and a film-forming rate of 3.5nm/s and the optical reflective layer consists of 99.99% by weight of Ag with a thickness of 140nm. The sulfur and chlorine densities of the upper protective layer were 0.1% by weight or less.

As a result, a layer composition containing polycarbonate substrate, 55nm of (ZnS)₈₀(SiO₂)₂₀ (mol%), 4nm of Al₂O₃, 12nm of Ge₅Ga₁₀Sb₇₅Sn₁₀, 12nm of (SnO₂)₆₀(SiO₂)₄₀, 4nm of Al₂O₃ and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 12m/s linear velocity, 1,500mW electricity, 38µm/r feed rate and a constant linear velocity from inner periphery to outer periphery. Peeling off of Ag did not occur by initialization. Moreover, a spectrum which is presumed to be of Ag-O was obtained as a result of an analysis on the interface by means of XPS.

Next, an overwriting (DOW) was performed on the obtained phase-change optical recording medium on a format of DVD-ROM readable using a recording/reproducing evaluation apparatus DDU1000 by Pulstec Industrial Co., Ltd. at a recording linear velocity of 14m/s, wavelength of 657nm, NA0.65 and write power of 17mW to 22mW.

As a result, appropriate jitter of 9% or less was obtained with 2,000 times or more of overwriting. And after storing the recorded phase-change optical recording medium for a predetermined time at 80°C85%RH, no degradation was observed after 200 hours of storage. Furthermore, when the recorded phase-change optical recording medium was surveyed with TEM, electron diffraction of the upper protective layer was a halo pattern which indicates that it is amorphous.

Further, because of appropriate film-forming rate of the upper protective layer, no adverse effect on the entire production rate was observed.

### Example 4

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer and Ag optical reflective layer of 99.99% by weight purity were formed sequentially on the substrate by sputtering. The lower protective layer consists of (ZnS)₈₀(SiO₂)₂₀ (mol%) with a thickness of 52nm, the first intermediate layer consists of TiO₂ with a thickness of 4nm, the optical recording layer consists of Ge₅Ga₁₀Sb₇₅Sn₁₀ with a thickness of 12nm, the upper protective layer consists of (In₂O₃)₆₆(ZrO₂)₃₄ with a thickness of 12nm formed at a plasma power of 4kW/200mmϕ and a film-forming rate of 5.5nm/s and the optical reflective layer consists of 99.99% by weight of Ag with a thickness of 140nm. The sulfur and chlorine densities of the upper protective layer were 0.1% by weight or less.

As a result, a layer composition containing polycarbonate substrate, 52nm of (ZnS)₈₀(SiO₂)₂₀ (mol%), 4nm of TiO₂, 12nm of Ge₅Ga₁₀Sb₇₅Sn₁₀, 12nm of (In₂O₃)₆₆(ZrO₂)₃₄ and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 12m/s linear velocity, 1,500mW electricity, 38µm/r feed rate and a constant linear velocity from inner periphery to outer periphery. Peeling off of Ag did not occur by initialization. Moreover, a spectrum which is presumed to be of Ag-O was obtained as a result of an analysis on the interface by means of XPS.

Next, an overwriting (DOW) was performed on the obtained phase-change optical recording medium on a format of DVD-ROM readable using a recording/reproducing evaluation apparatus DDU1000 by Pulstec Industrial Co., Ltd. at a recording linear velocity of 14m/s, wavelength of 657nm, NA0.65 and write power of 17mW to 22mW.

As a result, appropriate jitter of 9% or less was obtained with 2,000 times or more of overwriting. And after storing the recorded phase-change optical recording medium for a predetermined time at 80°C85%RH, no degradation was observed after 200 hours of storage. Furthermore, when the recorded phase-change optical recording medium was surveyed with TEM, electron diffraction of the upper protective layer was a halo pattern which indicates that it is amorphous.

Further, because of appropriate film-forming rate of the upper protective layer, no adverse effect on the entire production rate was observed.

### Example 5

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer and Ag optical reflective layer of 99.99% by weight purity were formed sequentially on the substrate by sputtering. The lower protective layer consists of (ZnS)₈₀(SiO₂)₂₀ (mol%) with a thickness of 52nm, the first intermediate layer consists of TiO₂ with a thickness of 4nm, the optical recording layer consists of Ge₅Ga₁₀Sb₇₅Sn₁₀ with a thickness of 12nm, the upper protective layer consists of two layers of AIN with a thickness of 8nm and SiO_{1.7} with a thickness of 4nm and the optical reflective layer consists of 99.99% by weight of Ag with a thickness of 140nm. The sulfur and chlorine densities in two layers of the upper protective layer, AlN layer and SiO_{1.7} layer, were 0.1% by weight or less.

As a result, a layer composition containing polycarbonate substrate, 52nm of (ZnS)₈₀(SiO₂)₂₀ (mol%), 4nm of TiO₂, 12nm of Ge₅Ga₁₀Sb₇₅Sn₁₀, 8nm of AlN, 4nm of SiO_{1.7} and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 12m/s linear velocity, 1,500mW electricity, 38µm/r feed rate and a constant linear velocity from inner periphery to outer periphery. Peeling off of Ag did not occur by initialization. Moreover, a spectrum which is presumed to be of Ag⁻O was obtained as a result of an analysis on the interface by means of XPS.

Next, an overwriting (DOW) was performed on the obtained phase-change optical recording medium on a format of DVD-ROM readable using a recording/reproducing evaluation apparatus DDU1000 by Pulstec Industrial Co., Ltd. at a recording linear velocity of 14m/s, wavelength of 657nm, NA0.65 and write power of 17mW to 22mW.

As a result, appropriate jitter of 9% or less was obtained with 2,000 times or more of overwriting. The write power at which the jitter value becomes a minimum was approximately 1.5mW smaller compared to those of Examples 1 to 4 and improvement of sensitivity by lamination of the upper protective layer was confirmed.

And after storing the recorded phase-change optical recording medium for a predetermined time at 80°C85%RH, no degradation was observed after 200 hours of storage. Furthermore, when the recorded phase-change optical recording medium was surveyed with TEM, electron diffraction of the upper protective layer showed a halo pattern indicating that it is in amorphous state.

### Comparative Example 1

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer of 99.95% by weight purity and Ag optical reflective layer of 99.99% by weight purity were formed sequentially on the substrate by sputtering. The lower protective layer consists of (ZnS)₈₀(SiO₂)₂₀ (mol%) with a thickness of 55nm, the first intermediate layer consists of SiO₂ with a thickness of 4nm, the optical recording layer consists of Ge₅Ga₁₀Sb₇₅Sn₁₀ with a thickness of 12nm, the upper protective layer consists of SiO_{1.5} with a thickness of 12nm formed at a plasma power of 4kW/200mmϕ and a film-forming rate of 3.0nm/s and the optical reflective layer consists of 99.99% by weight of Ag with a thickness of 140nm.

As a result, a layer composition containing polycarbonate substrate, 55nm of (ZnS)₈₀(SiO₂)₂₀ (mol%), 4nm of SiO₂, 12nm of Ge₅Ga₁₀Sb₇₅Sn₁₀, 12nm of 99.95% by weight of SiO_{1.5} and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 12m/s linear velocity, 1,500mW electricity, 38µm/r feed rate and a constant linear velocity from inner periphery to outer periphery.

Next, a recording was performed on the obtained phase-change optical recording medium on a format of DVD-ROM readable using a recording/reproducing evaluation apparatus by Pulstec Industrial Co., Ltd. at a recording linear velocity of 14m/s, wavelength of 657nm, NA0.65 and write power of 17mW to 22mW. As a result, reflectance after recording was 15% and DVD-ROM readable compatibility was notably degraded. This is thought to be caused by the reflectance degradation of the phase-change optical recording medium because of using SiO_{1.5}, which has a high optical absorption due to lack of oxygen, for the upper protective layer.

### Comparative Example 2

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer of 99.95% by weight purity and Ag optical reflective layer of 99.99% by weight purity were formed sequentially on the substrate by sputtering. The lower protective layer consists of (ZnS)₈₀(SiO₂)₂₀ (mol%) with a thickness of 55nm, the first intermediate layer consists of SiO₂ with a thickness of 4nm, the optical recording layer consists of Ge₅Ga₁₀Sb₇₅Sn₁₀ with a thickness of 12nm, the upper protective layer consists of (Nb₂O₅)₈₀(SiO₂)₂₀ with a thickness of 3nm formed at a plasma power of 4kW/200mmϕ and a film-forming rate of 4.2nm/s and the optical reflective layer consists of 99.99% by weight of Ag with a thickness of 140nm.

As a result, a layer composition containing polycarbonate substrate, 55nm of (ZnS)₈₀(SiO₂)₂₀ (mol%), 4nm of SiO₂, 12nm of Ge₅Ga₁₀Sb₇₅Sn₁₀, 3nm of 99.95% by weight of (Nb₂O₅)₈₀(SiO₂)₂₀ and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 9m/s linear velocity, 1,500mW electricity, 38µm/r feed rate and a constant linear velocity from inner periphery to outer periphery.

Next, a recording was performed on the obtained phase-change optical recording medium on a format of DVD-ROM readable using a recording/reproducing evaluation apparatus by Pulstec Industrial Co., Ltd. at a recording linear velocity of 14m/s, wavelength of 657nm, NA0.65 and write power of 17mW to 22mW. As a result, modulation degree after recording was 0.5 and DVD-ROM readable compatibility was notably degraded. This was thought to be caused by the modulation degree degradation of the phase-change optical recording medium because write power was not effectively utilized due to the thickness of the upper protective layer which is as thin as 3nm.

### Comparative Example 3

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer of 99.95% by weight purity and Ag optical reflective layer of 99.99% by weight purity were formed sequentially on the substrate by sputtering. The lower protective layer consists of (ZnS)₈₀(SiO₂)₂₀ (mol%) with a thickness of 55nm, the first intermediate layer consists of SiO₂ with a thickness of 4nm, the optical recording layer consists of Ge₅In₅Sb₇₂Te₁₈ with a thickness of 12nm, the upper protective layer consists of (SnO₂)₇₀(SiO₂)₃₀ with a thickness of 25nm formed at a plasma power of 4kW/200mmϕ and a film-forming rate of 7.6nm/s and the optical reflective layer consists of 99.99% by weight of Ag with a thickness of 140nm.

As a result, a layer composition containing polycarbonate substrate, 55nm of (ZnS)₈₀(SiO₂)₂₀ (mol%), 4nm of SiO₂, 12nm of Ge₅In₅Sb₇₂Te₁₈, 25nm of 99.95% by weight of (SnO₂)₇₀(SiO₂)₃₀ and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 12m/s linear velocity, 1,500mW electricity, 38µm/r feed rate and a constant linear velocity from inner periphery to outer periphery.

Next, a recording was performed on the obtained phase-change optical recording medium on a format of DVD-ROM readable using a recording/reproducing evaluation apparatus by Pulstec Industrial Co., Ltd. at a recording linear velocity of 14m/s, wavelength of 657nm, NA0.65 and write power of 20mW. After storing the phase-change optical recording medium at 80°C85%RH for 300 hours after recording, increase in error was observed. Furthermore, when the upper protective layer was surveyed with TEM, electron diffraction of the upper protective layer showed fine spot patterns. This was thought to be caused by degradation of stability in amorphous state of the upper protective layer due to the thickness of the upper protective layer which is as thick as 25nm.

### Comparative Example 4

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer of 99.95% by weight purity and Ag optical reflective layer of 99.99% by weight purity were formed sequentially on the substrate by sputtering. The lower protective layer consists of (ZnS)₈₀(SiO₂)₂₀ (mol%) with a thickness of 55nm, the first intermediate layer consists of SiO₂ with a thickness of 4nm, the optical recording layer consists of Ge₅In₅Sb₇₂Te₁₈ with a thickness of 7nm, the upper protective layer consists of (ZnO)₆₀(ZrO₂)₄₀ with a thickness of 12nm formed at a plasma power of 4kW/200mmϕ and a film-forming rate of 4.0nm/s and the optical reflective layer consists of 99.99% by weight of Ag with a thickness of 140nm.

As a result, a layer composition containing polycarbonate substrate, 55nm of (ZnS)₈₀(SiO₂)₂₀ (mol%), 4nm of SiO₂, 7nm of Ge₅In₅Sb₇₂Te₁₈, 12nm of 99.95% by weight of (ZnO)₆₀(ZrO₂)₄₀ and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 12m/s linear velocity, 1,500mW electricity, 38µm/r feed rate and a constant linear velocity from inner periphery to outer periphery.

Next, a recording was performed on the obtained phase-change optical recording medium on a format of DVD-ROM readable using a recording/reproducing evaluation apparatus by Pulstec Industrial Co., Ltd. at a recording linear velocity of 14m/s, wavelength of 657nm, NA0.65 and write power of 20mW. After storing the phase-change optical recording medium at 80°C85%RH for 300 hours after recording, increase in error was observed. This was thought to be caused by the markedly increased crystallization of the recording mark from the interface of the optical recording layer due to the thickness of the optical recording layer which is as thin as 7nm.

### Comparative Example 5

First, a polycarbonate substrate of 0.6mm thickness, having a guide groove of 0.25µm groove width, 27nm groove depth and 4.26µm frequency wobble groove was formed by injection molding and a lower protective layer, a first intermediate layer, an optical recording layer, an upper protective layer of 99.95% by weight purity and Ag optical reflective layer of 99.99% by weight purity were formed sequentially on the substrate by sputtering. The lower protective layer consists of (ZnS)₈₀(SiO₂)₂₀ (mol%) with a thickness of 55nm, the first intermediate layer consists of SiO₂ with a thickness of 4nm, the optical recording layer consists of Ge₅Ga₁₀Sb₇₅Sn₁₀ with a thickness of 15nm, the upper protective layer consists of (ZnO)₆₀(ZrO₂)₄₀ with a thickness of 12nm formed at a plasma power of 4kW/200mmϕ and a film-forming rate of 4.0nm/s and the optical reflective layer consists of 99.99% by weight of Ag with a thickness of 140nm.

As a result, a layer composition containing polycarbonate substrate, 55nm of (ZnS)₈₀(SiO₂)₂₀ (mol%), 4nm of SiO₂, 15nm of Ge₅Ga₁₀Sb₇₅Sn₁₀, 12nm of 99.95% by weight of (ZnO)₆₀(ZrO₂)₄₀ and 140nm of 99.99% by weight of Ag was formed.

Next, Ag optical reflective layer was coated with an ultraviolet curable resin (SD318 by Dainippon Ink And Chemicals, Inc.) which has a viscosity at room temperature of 120cps and a glass transition temperature after curing of 149°C by spincoating to form a resin protective layer and a single plate disc of phase-change optical recording medium was produced.

Next, a bonding substrate made of polycarbonate was bonded using an ultraviolet curable adhesive bond (DVD003 by Nippon Kayaku Co., Ltd.) having a viscosity at room temperature of 450cps and a glass transition temperature after curing of 75°C to obtain a phase-change optical recording medium.

And an entire surface of the optical recording layer was crystallized using an initialization apparatus by Hitachi Computer Peripherals Co., Ltd. having a large diameter LD (beam diameter: 75µm × 1µm) at 12m/s linear velocity, 1,500mW electricity, 38µm/r feed rate and a constant linear velocity from inner periphery to outer periphery.

Next, an overwriting (DOW) was performed on the obtained phase-change optical recording medium on a format of DVD-ROM readable using a recording/reproducing evaluation apparatus by Pulstec Industrial Co., Ltd. at a recording linear velocity of 14m/s, wavelength of 657nm, NA0.65 and write power of 17mW to 22mW. As a result, increase in jitter value (13% or more jitter), which is a level at which reproducing by DVD-ROM player is difficult, was observed after 1,000 times of overwriting. This was thought to be caused by composition segregation in the optical recording layer due to the thickness of the optical recording layer as thick as 15nm.

## Claims

1. An optical recording medium comprising:
a substrate;
a lower protective layer;
an optical recording layer;
an upper protective layer; and
an optical reflective layer,
wherein the optical reflective layer comprises 98% by weight or more of Ag,
the thickness of the optical recording layer is 8nm to 14nm and the thickness of the upper protective layer is 4nm to 24nm,
the upper protective layer comprises at least one of zinc oxide, indium oxide, tin oxide, niobium oxide, silicon nitride, aluminum nitride and SiOx (1.6 ≤ x ≤ 1.9) and less than 0.1% by weight of at least any one of sulfur and chlorine, and
the upper protective layer is amorphous after recording or rewriting.

2. The optical recording medium according to claim 1,
wherein the upper protective layer comprises two or more layers and at least one layer comprises at least one of zinc oxide, indium oxide, tin oxide, niobium oxide, silicon nitride, aluminum nitride and SiOx (1.6 ≤ x ≤ 1.9).

3. The optical recording medium according to claim 1,
wherein the upper protective layer comprises two or more layers and the most thick layer comprises at least one of zinc oxide, indium oxide, tin oxide, niobium oxide, silicon nitride, aluminum nitride and SiOx (1.6 ≤ x ≤ 1.9).

4. The optical recording medium according to any one of claims 1 to 3, wherein the total amount of zinc oxide, indium oxide, tin oxide, niobium oxide, silicon nitride, aluminum nitride and SiOx (1.6 ≤ x ≤ 1.9) contained in the upper protective layer is 60 mol% to 90 mol% of the whole upper protective layer material.

5. The optical recording medium according to any one of claims 1 to 4, wherein an Ag-O binding exists on an interface between the upper protective layer and the optical reflective layer.

6. The optical recording medium according to any one of claims 1 to 5, wherein at least one layer making up the upper protective layer is formed at a film-forming rate of 1nm/s or more and 10nm/s or less.
